# EUROPEAN PATENT SPECIFICATION

(11) **EP 1 817 779 B1**
(45) Date of publication and mention of the grant of the patent: **10.02.2010**
(21) Application number: 05805944.5
(22) Date of filing: 04.11.2005
(51) Int. Cl.: H01F 1/00, C08J 9/28, G11B 5/86, B22F 1/00, B82B 1/00

(54) **REGULARLY ARRAYED NANOSTRUCTURED MATERIAL**
GLEICHMÄßIG ANGEORDNETES NANOSTRUKTURIERTES MATERIAL
MATIERE NANOSTRUCTUREE EN RESEAUX REGULIERS

(30) Priority: 05.11.2004 JP 2004321602
(43) Date of publication of application: 15.08.2007
(73) Proprietor: FUJIFILM Corporation, Minato-ku Tokyo 106-0031 (JP)
(72) Inventor: WAKI, Koukichi, c/o Fuji Photo Film Co., Ltd., Minami-ashigara-shi, Kanagawa 2500193 (JP)
(74) Representative: Blake, John Henry Francis
(86) International application number: PCT/JP2005/020659
(87) International publication number: WO 2006/049320

(56) References cited:
- JP-A- 2003 318 010
- US-A1- 2002 143 073
- J.-H. YIM ET AL.: "The preparation and characterization of smallmesopores in siloxane-based materials that use cyclodextrins as templates" ADVANCED FUNCTIONAL MATERIALS, vol. 13, no. 5, May 2003 (2003-05), pages 382-386, XP002421370 Weinheim
- MARUYAMA N ET AL: "Mesoscopic patterns of molecular aggregates on solid substrates" PREPARATION AND CHARACTERIZATION, ELSEVIER SEQUOIA, NL, vol. 327-329, 31 August 1998 (1998-08-31), pages 854-856, XP004355842 ISSN: 0040-6090

## Description

### TECHNICAL FIELD

The present invention relates to a nanostructured material comprising nanoparticles incorporated into pores in regularly arrayed domain structures.

### BACKGROUND ART

It is generally well known that at the time when a minute particle with a size that is on the order of 10 to several nanometers is formed by fragmenting a substance, a different property from that of a bulk state is expressed. Examples thereof include a significant decrease in melting point, expression of a quantum effect and the like, and development of an applied technology utilizing such a phenomenon has been actively promoted. Specific examples of such an application include a high-performance composite material, catalyst, nonlinear optical material, memory element and the like, and the application extends to various technical fields.

It is extremely natural to come up with an idea to create a two-dimensional or three-dimensional array in which respective particles are arrayed in order and to produce a device utilizing such an array for efficiently making use of such a specific property of the minute particle, and such studies have been actively conducted recently.

Since a scanning probe microscope and the like were developed recently, it becomes possible to manipulate respective minute particles one by one to create an array, however, it is not practical for industrial applications due to its low productivity.

In order to promote the array of minute particles, a method of arraying minute particles on a substrate which has been patterned in advance is also considered. As a method of patterning, photolithography is effective, however, the limit of conventional lithography patterning to a size less than 100 nm is well known (e.g., Lithography for ULSI (Okazaki, Proceedings of SPIE Vol. 2440, p. 18)).

For patterning suitable for a minute particle with a size of several tens to several nanometers, it is necessary to shorten the wavelength of a light source, however, it is said that the limit is approximately 50 nm even with a deep ultraviolet (DUV) light source. Further, extreme ultraviolet lithography and X-ray lithography in which the wavelength of the light has been further shortened, and direct writing systems including electron beam lithography and scanning probe lithography have also been developed. However, there are disadvantages in that an enormous amount of capital investment for both the radiation source and the supporting optical system is required for any case, and also it takes enormous production time for the direct writing systems because they are sequential systems.

In US Patent No. 6, 265, 021, an arraying method utilizing synthetic DNA lattices has been disclosed, however, in this method, an investment in expensive equipment is necessary for production of lattices, automatic synthesis of DNA and the like.

In JP-A-10-261244, JP-A-2002-353432, JP-A-2004- 193523 and JP-A-2003-268592, a nanostructure using anodically oxidized alumina has been disclosed, however, this method has a disadvantage in that it is difficult to obtain a regular structure over a large area, and an assembly of irregular domain structures will be formed.

In JP-A-2001-168317, JP-A-2003-67919 and JP-A-2003-168606, a regularly arrayed film utilizing adsorption of thiol molecules has been disclosed, however, this method also has a disadvantage in that it is difficult to obtain a regular structure over a large area, and an assembly of irregular domain structures will be formed.

In JP-A-2003-247081, a self-organizing film utilizing a dendrimer has been disclosed, however, this method also has a disadvantage in that the film has irregular domain structures in the same manner as in the above-mentioned case of thiol molecules and a regularly arrayed film over a large area cannot be formed.

Further, in JP-A-2001-151834, a regular pattern formation material utilizing micro phase separation in such as block copolymers has been disclosed, however, this method also has a disadvantage in that it is difficult to obtain a regular structure over a large area, and an assembly of irregular domain structures will be formed.

In JP-A-2004-122283, a method of forming minute pores in a material layer using nanoindenters having pyramid indenters has been disclosed. Although it is easy to form a regular structure over a large area, it is very difficult to arrange the pyramid indenters at certain intervals so as to form nanostructures.

In JP-A-2003-183849, a method of forming a regular structure by arraying polystyrene particles has been disclosed and in JP-A-2003-318010, a method of forming a regular structure by applying a mixing solution of a hydrophobic polymer and an amphiphilic polymer on a substrate and a high-humidity gas is sent at a constant flow rate to evaporate minute water vapor droplets condensed as an organic solvent is evaporated has been disclosed. Both methods cannot eliminate irregular domain structures, and improvement has been demanded.

US 2002/0143073 describes ordered, monodisperse macroporous polymers, their corresponding ordered, monodisperse colloids, and methods of preparing them. The methods use an ordered, monodisperse colloidal template to define the polymer pore morphology, which in turn acts as a mould for the growth of the ordered, monodisperse colloid. The macroporous polymer may be prepared with either spherical or ellipsoidal pores from a wide variety of polymeric systems. The colloid may be grown from a wide variety of materials including ceramics, semiconductors, metals and polymers.

### DISCLOSURE OF THE INVENTION

In view of the above-mentioned problems of the prior art, an object of the present invention is to provide nanostructures regularly arrayed over a large area and in particular to provide nanostructures regularly arrayed over a large area that can be produced at low cost.

As a result of intensive studies, the present inventors have found that the above-mentioned problems can be solved by the present invention shown below.

That is, the present invention is a nanostructured material as defined in claim 1 and a corresponding preparation method as defined in claim 7.

In addition, it is preferred that the heat resistance temperature of the substrate is 300°C or higher.

In addition, it is preferred that the nanoparticles incorporated into the regularly arrayed pores are particles of a metal, a metal sulfide, a metal oxide or an organic material. In particular, it is preferred that the nanoparticles incorporated into the regularly arrayed pores are magnetic nanoparticles with an average size of 2 to 20 nm.

In addition, it is preferred that the periphery of the regularly arrayed domain structures is surrounded by a frame with a width of 10 nm to 10 µm and a height of 2 to 100 nm.

In addition, it is preferred that the coefficient of variation of the pore size of the regularly arrayed pores is 20% or less.

According to the present invention, nanostructures regularly arrayed over a large area having regularly arrayed domain structures and regularly arrayed nanostructures formed therein can be provided. The nanostructures of the present invention can be produced at low cost and can be effectively utilized in many fields such as a high-performance composite material, catalyst, nonlinear optical material and memory element.

### BEST MODE FOR CARRYING OUT THE INVENTION

Hereinafter, a nanostructured material of the present invention will be described in detail. The description of the structural requirements mentioned below is sometimes made based on a representative embodiment of the present invention, however, the present invention is not limited to such an embodiment. The numerical value range represented by using "to" as used herein means the range including the values before and after "to" as the lower and upper limits, respectively.

### <<Formation of regularly arrayed domain structures>>

Domain structures in the nanostructured material of the present invention may be produced by any production method, however, a method of stamping a given structure on an arbitrarily selected film with a stamper is preferably used. More preferably, a method of stamping a given structure on a sol-gel film with a stamper is used. There are three types of hybrid organic-inorganic sols for the sol-gel film, namely (1) dispersion type, (2) pendant type, and (3) copolymer type, and any of them may be used. However, in view of high heat resistance, it is preferred to use a pendant type or a copolymer type.

A hybrid organic-inorganic sol to be used in the present invention is a hydrolysate of a silane compound represented by the following formula (1) and/or a partial condensate thereof.

Formula (1) (R¹⁰)ₘ-Si(X)₄₋ₘ

In the formula, R¹⁰ represents a substituted or unsubstituted alkyl group, or a substituted or unsubstituted aryl group. X represents a hydroxyl group or a hydrolysable group, and examples thereof include an alkoxy group (an alkoxy group having 1 to 5 carbon atoms is preferred and examples thereof include a methoxy group, an ethoxy group and the like), a halogen atom (such as a chlorine atom, a bromine atom or an iodine atom) and R²COO (R² is preferably a hydrogen atom or an alkyl group having 1 to 5 carbon atoms, and examples thereof include CH₃COO, C₂H₅COO and the like), and preferred is an alkoxy group and particularly preferred is a methoxy group or an ethoxy group. m represents an integer of 0 to 3. When plural R¹⁰'s or X's are present, the plural R^{10'}s or X's may respectively be the same or different. m is preferably 1 or 2, particularly preferably 1.

As the substituent contained in R¹⁰, there is no limitation, however, examples thereof include a halogen atom (such as a fluorine atom, a chlorine atom or a bromine atom), a hydroxyl group, a mercapto group, a carboxyl group, an epoxy group, an alkyl group (such as a methyl group, an ethyl group, an isopropyl group, a propyl group or a tert-butyl group), an aryl group (such as a phenyl group or a naphthyl group), an aromatic heterocyclic group (such as a furyl group, a pyrazolyl group or a pyridyl group), an alkoxy group (such as a methoxy group, an ethoxy group, an isopropoxy group or a hexyloxy group), an aryloxy group (such as a phenoxy group), an alkylthio group (such as a methylthio group or an ethylthio group), an arylthio group (such as a phenylthio group), an alkenyl group (such as a vinyl group or a 1-propenyl group), an acyloxy group (such as an acetoxy group, an acryloyloxy group or a methacryloyloxy group), an alkoxycarbonyl group (such as a methoxycarbonyl group or an ethoxycarbonyl group), an aryloxycarbonyl group (such as a phenoxycarbonyl group), a carbamoyl group (such as a carbamoyl group, an N-methylcarbamoyl group, an N,N-dimethylcarbamoyl group or an N-methyl-N-octylcarbamoyl group), an acylamino group (such as an acetylamino group, a benzoylamino group, an acrylamino group or a methacrylamino group) and the like. These substituents may be further substituted.

When plural R¹⁰'s are present, it is preferred that at least one of them is a substituted alkyl group or a substituted aryl group, and particularly preferred is an organosilane compound having a vinyl polymerizable substituent represented by the formula (2).

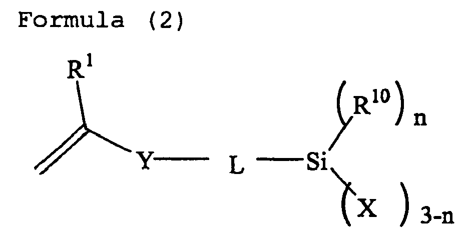

In the formula (2), R¹ represents a hydrogen atom, a methyl group, a methoxy group, an alkoxycarbonyl group, a cyano group, a fluorine atom or a chlorine atom. Examples of the alkoxycarbonyl group include a methoxycarbonyl group, an ethoxycarbonyl group and the like. R¹ is preferably a hydrogen atom, a methyl group, a methoxy group, a methoxycarbonyl group, a cyano group, a fluorine atom or a chlorine atom, more preferably a hydrogen atom, a methyl group, a methoxycarbonyl group, a fluorine atom or a chlorine atom, particularly preferably a hydrogen atom or a methyl group.

Y represents a single bond, an ester group, an amido group, an ether group or a urea group. Y is preferably a single bond, an ester group or an amido group, more preferably a single bond or an ester group, particularly preferably an ester group.

L represents a divalent linking group. Specific examples thereof include a substituted or unsubstituted alkylene group, a substituted or unsubstituted arylene group, a substituted or unsubstituted alkylene group having a linking group (such as an ether group, an ester group or an amido group) in the chain thereof or a substituted or unsubstituted arylene group having a linking group in the chain thereof. L is preferably a substituted or unsubstituted alkylene group, a substituted or unsubstituted arylene group or an alkylene group having a linking group in the chain thereof, more preferably an unsubstituted alkylene group, an unsubstituted arylene group or an alkylene group having an ether group or an ester group, particularly preferably an unsubstituted alkylene group or an alkylene group having an ether group or an ester group. Examples of the substituent include a halogen atom, a hydroxyl group, a mercapto group, a carboxyl group, an epoxy group, an alkyl group, an aryl group and the like. These substituents may be further substituted.

n represents 0 or 1. When plural X's are present, the plural X's may respectively be the same or different. n is preferably 0.

R¹⁰ is the same as defined in the formula (1), and is preferably a substituted or unsubstituted alkyl group or an unsubstituted aryl group, more preferably an unsubstituted alkyl group or an unsubstituted aryl group.

X is the same as defined in the formula (1), and is preferably a halogen atom, a hydroxyl group or an unsubstituted alkoxy group, more preferably a chlorine atom, a hydroxyl group or an unsubstituted alkoxy group having 1 to 6 carbon atoms, still more preferably a hydroxyl group or an alkoxy group having 1 to 3 carbon atoms, particularly preferably a methoxy group.

The compounds represented by the formulae (1) and (2) can be used in combination of two or more thereof. Specific examples of the compound represented by the formulae (1) and (2) are shown below, however, the compound that can be used in the present invention is not limited to these.

| | |
|---|---|
| (1) | (C₂H₅O)₄-Si |
| (2) | (C₃H₇O)₄-Si |
| (3) | (i-C₃H₇O)₄-Si |
| (4) | (CH₃CO₂)₄-Si |
| (5) | (CH₃CO₂)₂-Si—(OC₂H₅)₂ |
| (6) | CH₃-Si-(OC₂H₅)₃ |
| (7) | C₂H₅-Si-(OC₂H₅)₃ |
| (8) | t-C₄H₉-Si-(OCH₃)₃ |
| (9) | 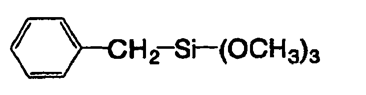 |
| (10) | 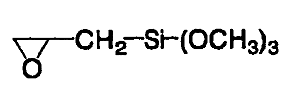 |
| (11) | 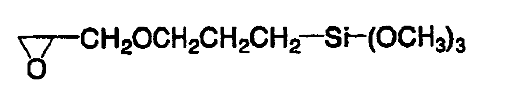 |
| (12) | 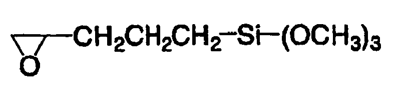 |
| (13) | 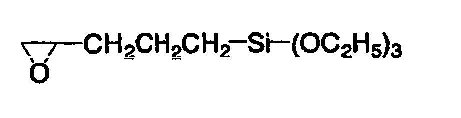 |
| (14) | 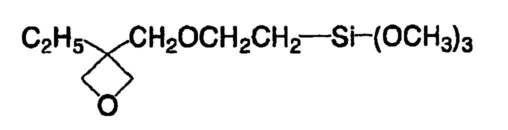 |
| (15) | 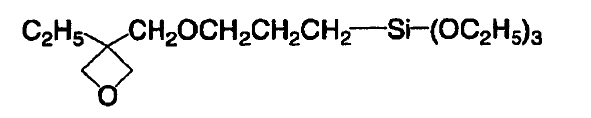 |
| (16) | C₃F₇CH₂CH₂-Si-(OC₂H₅)₃ |
| (17) | C₆F₁₃CH₂CH₂-Si-(OC₂H₅)₃ |
| (18) | 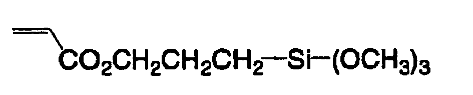 |
| (19) | 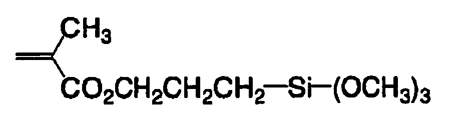 |
| (20) | 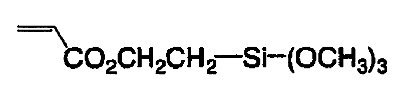 |
| (21) | 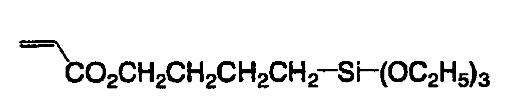 |
| (22) | 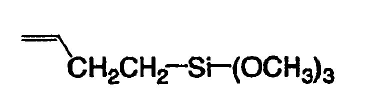 |
| (23) | 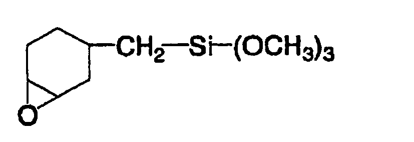 |
| (24) | 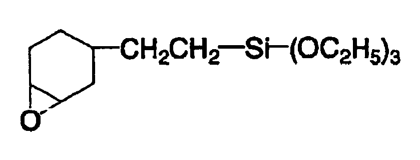 |
| (25) | 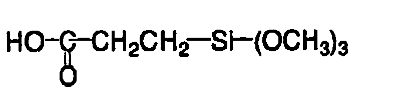 |
| (26) | NH₂CH₂CH₂CH₂-Si-(OCH₃)₃ |
| (27) | HS-CH₂CH₂CH₂-Si-(OCH₃)₃ |
| (28) | 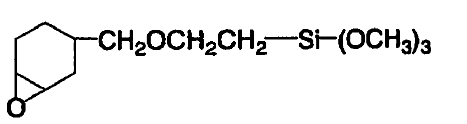 |
| (29) | 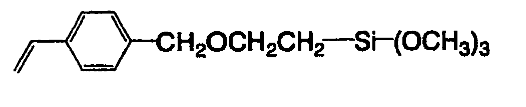 |
| (30) | (CH₃O)₃-si-CH₂CH₂CH₂CH₂-Si-(OCH₃)₃ |
| (31) | (CH₃O)₃-Si-CH₂CH₂CH₂CH₂CH₂CH₂-Si-(OCH₃)₃ |
| (32) | 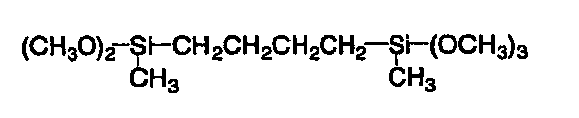 |
| (33) | 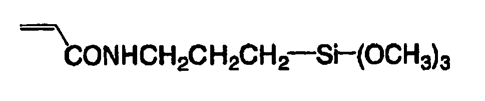 |
| (34) | 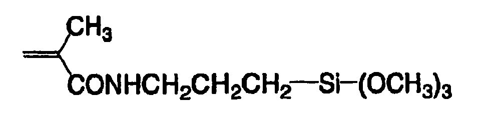 |
| (35) | 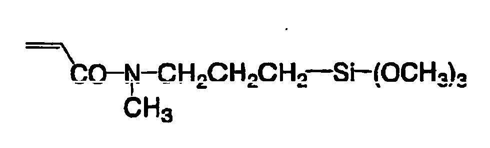 |
| (36) | 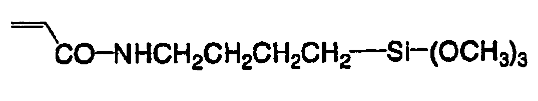 |
| (37) | 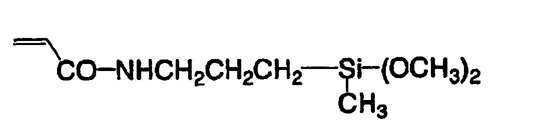 |
| (38) | 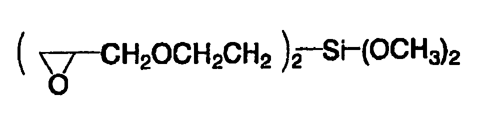 |
| (39) | 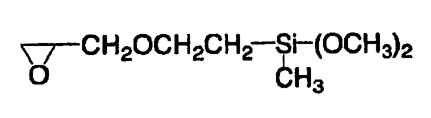 |
| (40) | 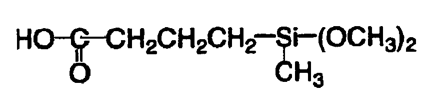 |
| (41) | 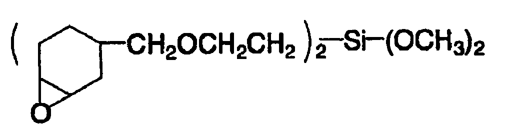 |
| (42) | 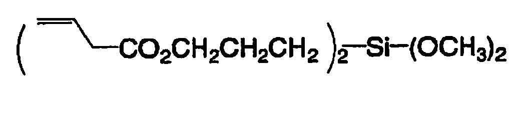 |
| (43) | CH₂=CH-Si-(OCH₃)₃ |
| (44) | 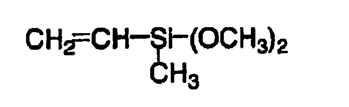 |
| (45) | 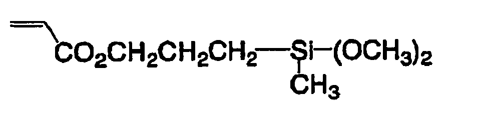 |

A hydrolysis or condensation reaction of the silane compound can be carried out with or without a solvent, however, it is preferred to use an organic solvent for uniformly mixing the components. Suitable organic solvents include alcohols, aromatic hydrocarbons, ethers, ketones, esters and the like. The solvent is preferably one capable of dissolving the silane compound and a catalyst. In addition, it is preferred that the solvent is used as a coating solution or a part of a coating solution in terms of the process.

Examples of the alcohols include monohydric alcohols and dihydric alcohols. Among these, as the monohydric alcohol, a saturated aliphatic alcohol having 1 to 8 carbon atoms is preferred. Specific examples of these alcohols include methanol, ethanol, n-propyl alcohol, isopropyl alcohol, n-butyl alcohol, sec-butyl alcohol, tert-butyl alcohol, ethylene glycol, diethylene glycol, triethylene glycol, ethylene glycol monobutyl ether, ethylene glycol monoethyl ether acetate and the like.

Specific examples of the aromatic hydrocarbons include benzene, toluene, xylene and the like. Specific examples of the ethers include tetrahydrofuran, dioxane and the like. Specific examples of the ketones include acetone, methyl ethyl ketone, methyl isobutyl ketone, diisobutyl ketone and the like. Specific examples of the esters include ethyl acetate, propyl acetate, butyl acetate, propylene carbonate and the like.

These organic solvents can be used either individually or in combination of two or more thereof. The concentration of the solid content for the reaction is not particularly limited, however, it usually ranges from 1 to 90% by mass, preferably from 20 to 70% by mass.

The hydrolysis or condensation reaction of the silane compound is preferably carried out in the presence of a catalyst. Examples of the catalyst include inorganic acids such as hydrochloric acid, sulfuric acid and nitric acid; organic acids such as oxalic acid, acetic acid, formic acid, methanes ulfonic acid and toluenesulfonic acid; inorganic bases such as sodium hydroxide, potassium hydroxide and ammonia; organic bases such as triethylamine and pyridine; and metal alkoxides such as triisopropoxy aluminum and tetrabutoxy zirconium; and the like. From the viewpoint of production stability or storage st ability of the sol solution, an acid catalyst (an inorganic acid or an organic acid) is preferred. As the inorganic acid, hydrochloric acid and sulfuric acid, as the organic acid, one having an acid dissociation constant in water (pKa at 25°C) of 4.5 or smaller are preferred. More preferred are hydrochloric acid, sulfuric acid, and an organic acid having a pKa of 3.0 or smaller, still more preferred are hydrochloric acid, sulfuric acid, and an organic acid having a pKa in water of 2.5 or smaller, still more preferred is an organic acid having a pKa in water of 2.5 or smaller, still more prefer red are methanesulfonic acid, oxalic acid, phthalic acid, and malonic acid, and particularly preferred is oxalic acid.

The hydrolysis or condensation reaction is usually carried out by adding water in an amount of generally from 0.3 to 2 mol, preferably from 0.5 to 1 mol per one mol of the hydrolysable group of the silane compound and stirring the reaction system at 25°C to 100°C in the presence or absence of any of the above-mentioned solvents and preferably in the presence of the catalyst.

In the case where the silane compound has an alkoxide group as a hydrolysable group, and an organic acid is used as a catalyst, because the carboxyl group or sulfo group of the organic acid supplies a proton, the amount of water to be added can be reduced. The amount of water to be added ranges generally from 0 to 2 mol, preferably from 0 to 1.5 mol, more preferably from 0 to 1 mol, particularly preferably from 0 to 0.5 mol, per one mol of the alkoxide group of the silane compound. In the case where an alcohol is used as a solvent, the condition where substantially no water is added is also suitable.

In the case where an inorganic acid is used as a catalyst, the amount of the catalyst to be used ranges generally from 0.01 to 10% by mole, preferably from 0.1 to 5% by mole based on the hydrolysable group. In the case where an organic acid is used as a catalyst, the optimal amount of the catalyst to be used varies depending on the amount of water added. In the case where water is added, the amount of the catalyst to be used ranges generally from 0.01 to 10% by mole, preferably from 0.1 to 5% by mole based on the hydrolysable group. In the case where substantially no water is added, the amount of the catalyst ranges generally from 1 to 500% by mole, preferably from 10 to 200% by mole, more preferably from 20 to 200% by mole, still more preferably from 50 to 150% by mole, particularly preferably from 50 to 120% by mole based on the hydrolysable group.

The reaction is usually carried out by stirring the reaction system at 25 to 100°C, however it is preferred to select the reaction temperature according to the reactivity of the silane compound.

The film thickness of the gel film obtained by using a sol comprising a hydrolysate of a silane compound to be used in the present invention and/or a partial condensate thereof ranges generally from 2 to 100 nm, preferably from 5 to 50 nm.

The heating temperature for forming the film by gelling the sol comprising the hydrolysate of the silane compound of the present invention and/or a partial condensate thereof ranges generally from 100 to 250°C, preferably from 120 to 200°C.

A step of performing stamping with a stamper with a given shape in the present invention can be performed right after coating the sol, while forming the gel film or after forming the gel film, however, it is preferred to perform stamping after drying at 25 to 100°C.

With regard to the shape of the stamper in the present invention, the stamper has protrusions of a concentric arcuate shape, a trapezoidal shape, a rectangular shape or a square shape one side of which has a length ranging generally from 0. 1 to 100 µm, preferably from 0.1 to 60 nm, more preferably from 0.1 to 30 nm, and has grooves with a width ranging generally from 10 nm to 10 µm and a depth ranging generally from 2 to 100 nm between the protrusions. The width of the grooves ranges preferably from 10 nm to 6 µm, more preferably from 10 nm to 3 µm, and the depth of the grooves ranges preferably from 2 to 60 nm, more preferably from 2 to 30 nm.

It is preferred that the stamper in the present invention has a surface easy to be peeled off, and that the stamper is surface-treated with a metal or an organic compound.

The substrate on which regularly arrayed domain structures are formed in the present invention may be any substrate of an inorganic compound, an organic compound or a composite. Specifically, aluminum, a magnesium alloy, glass, quartz, carbon, silicon, ceramics, a polyester (such as polyethylene terephthalate or polyethylene naphthalate), a polyolefin, cellulose triacetate, a polycarbonate, an aliphatic polyamide, an aromatic polyamide, a polyimide, a polyamideimide, a polysulfone, polybenzooxazole or the like is used.

The heat resistance temperature of the substrate is preferably 300°C or higher, and it is more preferred to use a relevant substrate selected from the above list.

It is preferred that the substrate is smooth and has a surface roughness (Ra) of 5 nm or less, more preferably 2 nm or less. A substrate obtained by coating a non-smooth substrate with a foundation layer to make it smooth is also preferred. «Formation of regularly arrayed pores»

The size of regularly arrayed pores in the present invention ranges from 2 to 200 nm, preferably from 3 to 100 nm, more preferably from 5 to 50 nm.

It is preferred that the coefficient of variation of the pore size of the regularly arrayed pores in the present invention is 20% or less.

The regularly arrayed pores in the present invention are formed by preferably using a method of removing polystyrene particles after self-organizing them, a method of utilizing spherical or columnar structures by micro phase separation in block copolymers as regularly arrayed pores, a method of evaporating regularly arrayed condensed water droplets that can be formed by applying a solution obtained by dissolving a hydrophobic polymer and an amphiphilic polymer in a hydrophobic organic solvent and sending a gas with a relative humidity ranging from 50 to 95% at a constant flow rate, or the like. Among these, a method of coating polystyrene particles and a method with condensed water droplets are preferably used.

In the method using polystyrene particles, a dispersion solution containing polystyrene particles with a narrow particle size distribution is coated in the above-mentioned regularly arrayed domain structures to allow the styrene particles to be self-organized thereby forming regularly arrayed particle structures, and the polystyrene particles are removed by dissolving them, whereby pores are formed.

As the coating method, any of a variety of methods can be used, and specifically, spin coating, dip coating, air doctor coating, blade coating, rod coating, extrusion coating, ain knife coating, squeeze coating, impregnation coating, reverse-roll coating or the like is used.

A binder for binding polystyrene particles each other may be any as long as a continuous smooth film can be obtained, however, a sol-gel film having a heat resistance temperature of 300°C or higher is preferred. As the sol of the present invention, one described above is preferably used.

The binder may be coated after forming the self-organized structures of polystyrene particles or it may be added to the dispersion solution containing polystyrene particles in advance.

In the method with condensed water droplets, it is essential that minute water droplet particles should be formed on a polymer solution, therefore, it is necessary that a solvent to be used is not soluble in water. Examples of such a solvent include halogen-based organic solvents such as chloroform and methylene chloride; aromatic hydrocarbons such as benzene, toluene and xylene; esters such as ethyl acetate and butyl acetate; ethers such as diethyl ether; carbon disulfide; and the like. These solvents can be used individually or in combination of two or more thereof.

The total concentration of the hydrophobic polymer and the amphiphilic polymer dissolved in such a solvent ranges generally from 0.01 to 10% by mass, preferably from 0.05 to 5% by mass. When the concentration of the polymers is lower than 0.01% by mass, there is a tendency to cause a problem in that the mechanical strength of an obtained film is insufficient, the size of pores varies or pores are disarrayed. When the concentration of the polymers exceeds 10% by mass, there is a tendency that it is difficult to obtain sufficient pores.

The composition ratios of the hydrophobic polymer and the amphiphilic polymer preferably range from 99:1 to 50:50 (mass ratio). When the ratio of the amphiphilic polymer is 1% by mass or more, it becomes easy to obtain uniform pores, and when it is 50% by mass or less, it becomes easy to sufficiently obtain the stability, particularly the mechanical stability of the film.

As the substrate to be used in film formation, an inorganic material such as glass, a metal or a silicon wafer; an organic material excellent in organic solvent resistance such as polypropylene, polyethylene, polyether ketone or polyfluoroethylene; a liquid such as water, liquid paraffin or liquid polyether can be used.

As the gas which is sent at the time of film formation and whose humidity and flow rate are controlled, an inert gas such as nitrogen or argon other than air can be used, however, it is preferred that such a gas is subjected to dust removal treatment, for example, passing the gas through a filter in advance. Since dust in the atmosphere becomes condensation nuclei for water vapor and affects film production, it is preferred to install dust removal equipment at the production site.

It does not stick to any theory, however, it is presumed that the mechanism for forming regularly arrayed pores (honeycomb structure) by such a method is as follows. Water is condensed on the surface of a hydrophobic organic solvent whose temperature decreases due to the release of latent heat when the hydrophobic organic solvent is evaporated whereby water becomes minute water droplets and the droplets adhere to the surface of the polymer solution. Due to the action of the hydrophilic portion of the polymer solution, the surface tension between water and the hydrophobic organic solvent decreases, which prevents water droplets from aggregating to be unified into one block. Due to the evaporation of the solvent and the flow of the solvent caused by the replenishment from the surrounding, water droplets are transferred and accumulated, and further by the lateral capillary force, they are most compactly arranged. Finally, water is evaporated and the regularly arrayed polymers in a honeycomb-like shape remain.

As the environment in which film formation is carried out, it is preferred that the relative humidity ranges from 50 to 95%. When the relative humidity is 50% or higher, the condensation of water on the surface of the solvent proceeds sufficiently, and when it is 95% or lower, the controlling of the environment is easy and it becomes easy to form a uniform film.

As the environment in which film formation of the present invention is carried out, other than relative humidity, it is important to apply a steady wind whose flow rate is constant. The flow rate preferably ranges from 0.05 to 1 m/s. When the flow rate is 0.05 m/s or more, it is easy to control the environment, and when it is 1 m/s or less, no disturbance of the surface of the solvent is caused and it is easy to obtain a uniform film.

The direction to which the steady wind is applied is preferably 30 to 60° to the surface of the substrate for enhancing the uniformity of pores though the film can be formed even if the direction is any direction from 0 to 90° to the surface of the substrate.

It is preferred to strictly control the environment for film formation by, for example, using a commercially available constant dew point humidity generation device or the like. It is preferred to control the flow rate at a constant level with an air blower or the like and to use a closed space for preventing the effects of the outside air. In addition, it is preferred to set the input and output paths for the gas and the environment for film formation such that the gas is replaced by laminar flow in the room. Further, it is preferred to monitor the temperature, humidity, flow rate and the like with a measuring instrument for controlling the quality of the film formation. For controlling the pore size and the film thickness with a high degree of accuracy, it is essential to strictly control these parameters (especially humidity and flow rate).

The term "coefficient of variation" as used herein is defined as the standard deviation divided by the mean value and expressed as a percentage. The coefficient of variation of the pore size is practically defined as the value based on the pore size values, obtained by a scanning electron microscope, of 50 samples randomly extracted from the film area to be used.

### «Formation of nanostructures into which nanoparticles are incorporated»

The nanoparticles to be used in the present invention can be arbitrary selected according to the intended nanostructures, however, they are preferably particles of a metal, a metal sulfide or a metal oxide.

As specific examples of the metal, Ag, Au, Pt, Pd, Cu, Ru and the like are used individually or an alloy thereof. As specific examples of the metal sulfide, ZnS, CdS, PdS, In₂S₃, Au₂S, Ag₂S, FeS and the like are used. As specific examples of the metal oxide, TiO₂, SiO₂, Ag₂O, Cr₂O₃, ZrO₂, SnO₂, MnO and the like are used.

As the nanoparticles to be used in the present invention, magnetic nanoparticles with an average size of 2 to 20 nm are preferably used. As specific examples of the magnetic nanoparticle, FePt, CoPt, FePd, Fe₂O₃, Fe₃O₄, Sm₂Fe₁₇N₃, SmCo₅, Nd₂Fe₁₄B and the like are used. Since these magnetic nanoparticles have a high magnetic anisotropy constant and exhibit a high coercive force and thermostability even if they are small in size, they are effectively used for magnetic recording. By forming regularly arrayed nanostructures, they can be used as a magnetic recording medium with an extremely high density and high capacity.

The average size of the magnetic nanoparticles ranges preferably from 2 to 20 nm, more preferably from 3 to 10 nm.

The nanoparticles are incorporated by coating the nanoparticle dispersion solution on the above-mentioned regularly arrayed pores. As the coating method, the same method as in the case of coating the above-mentioned dispersion solution containing polystyrene particles is used.

It is preferred that at least one type of dispersant having 1 to 3 groups of an amino group, a carboxyl group, a sulfonic acid group and a sulfinic acid group is added to the nanoparticle dispersion solution in a proportion of 0.001 to 10 mol per one mol of the nanoparticles. By adding such a dispersant, it becomes possible to obtain a more monodisperse nanoparticle dispersion solution with no aggregation.

Examples of the dispersant include compounds represented by R-NH₂, NH₂-R-NH₂, NH₂-R (NH₂) -NH₂, R-COOH, COOH-R-COOH, COOH-R(COOH)-COOH, R-SO₃H, SO₃H-R-SO₃H, SO₃H-R(SO₃H)-SO₃H, R-SO₂H, SO₂H-R-SO₂H and SO₂H-R(SO₂H)- SO₂H, and the like. In the formula, R represents a linear, branched or cyclic saturated or unsaturated hydrocarbon.

A particularly preferred compound as the dispersant is oleic acid. Oleic acid is a known surfactant for stabilizing colloids and has been used for protecting metal particles such as iron particles. The relatively long chain of oleic acid (for example, oleic acid has a chain having 18 carbon atoms with a length of about 2 nm; oleic acid does belong to a fatty series and has one double bond therein) is able to give an important steric hindrance for extinguishing a strong magnetic interaction among the particles.

Similar long chain carboxylic acids such as erucic acid and linoleic acid are used in the same manner as oleic acid (for example, long chain organic acids having 8 to 22 carbon atoms maybe used individually or in combination thereof). Oleic acid (such as olive oil) is preferred since it is an inexpensive natural resource that is readily available. Oleylamine derived from oleic acid is also a useful dispersant like oleic acid.

Hereinafter, features of the present invention will be described in more detail with reference to Examples. The materials, amounts, ratios, types and procedures of processes and the like shown in the following Examples can be optionally changed as long as such change does not depart from the present invention. Therefore, the scope of the present invention is defined in the claims and should not be construed in any limitative way based on the following specific examples.

### [Example 1]

### (Preparation of a sol composition containing an organosilane)

In a reactor equipped with a stirrer and a reflux condenser, 100 g of acryloyloxypropyl trimethoxysilane (Compound Example (18)) was dissolved in 121 g of methyl ethyl ketone, and 0.125 g of hydroquinone monomethyl ether, 5.86 g (30% by mass) of aluminum ethylacetoacetate diisopropylate and 23.0 g of water (H₂O) were added and mixed thereto and then reaction was carried out at 60°C for 3 hours. Then, the reaction mixture was cooled to room temperature, whereby a sol composition was obtained. All the components of this sol were an oligomer or higher molecular weight polymer (weight average molecular weight: 1000 to 2000).

### (Formation of regularly arrayed domain structures)

To the above-mentioned sol composition, 2-ethoxyethanol was added and the sol concentration was adjusted to 1% by mass. Then, the mixture was allowed to drop onto a glass disk substrate having a diameter of 65 mm with a hole having a diameter of 20 mm in the center and rotating at 50 rpm and spin coating was effected at 4, 000 rpm. After the spin coating process, a nickel stamper having a pattern in which concentric arcs having the inner arc length of 5 µm and a width of 2 µm were arranged on the entire surface in such a manner that the arcs are separated by grooves with a width of 250 nm and a depth of 20 nm was placed on the disk substrate in a circle area between 25 mm to 60 mm from the center, and heating was carried out under the state at 150°C for 20 minutes. Thereafter, they were separated from one another by sonication while rapidly cooling, whereby a sol-gel film having domain structures in which concentric arcs are regularly arrayed was formed.

### (Formation of regularly arrayed pores)

A coating solution obtained by adding the above-mentioned sol composition to a dispersion solution containing polystyrene particles with an average size of 21 nm (coefficient of variation: 5%) at 1% by mass in an amount to give a concentration of 35% by volume based on the polystyrene particles was spin coated onto the above-mentioned regularly arrayed domain structures. After the solution was dried at 60°C, the polystyrene particles were dissolved with toluene, whereby regularly arrayed nanopores were formed. Thereafter, this film with the nanopores was dried at 150°C for 20 minutes to form a hard gel film.

### (Incorporation of nanoparticles)

A decane dispersion solution obtained by allowing oleic acid to be adsorbed to FePt nanoparticles with an average size of 5 nm (coefficient of variation: 8%) and dispersing the particles was spin coated onto the above-mentioned regularly arrayed nanopores and dried at 200°C for 20 minutes, whereby nanostructures were formed.

When the completed nanostructures were observed with a high-resolution scanning electron microscope, a regularly arrayed nanostructures in which regularly arrayed nanopores were formed in the regularly arrayed domain structures and FePt nanoparticles were incorporated into these nanopores were observed.

### [Comparative Example 1]

Nanostructures were formed in the same manner as in Example 1 except that formation of regularly arrayed domain structures was omitted. When the completed nanostructures were observed with a high-resolution scanning electron microscope, they were found to be structures in which nanoparticles were regularly arrayed in part in the random domain structures.

### [Example 2]

The same regularly arrayed nanostructures as in Example 1 were formed and subjected to heat treatment at 475°C for 30 minutes in a mixed gas atmosphere of Ar and H₂ (5%). After cooling, a solution obtained by diluting the above-mentioned sol composition to 0.05% by mass was spin coated on the nanostructures and dried at 150°C for 20 minutes.

A smooth ferromagnetic medium having an average surface roughness (Ra) of 0.8 nm was obtained.

### [Example 3]

### (Preparation of a sol composition containing an organosilane)

To a reactor equipped with a stirrer and a reflux condenser, 100 g of methacryloyloxypropyl trimethoxysilane (Compound Example (19)), 120 g of oxalic acid and 450 g of ethanol were added and mixed and then reaction was carried out at 70°C for 5 hours. Then, the reaction mixture was cooled to room temperature, whereby a sol composition was obtained. All the components of this sol were an oligomer or higher molecular weight polymer (weight average molecular weight: 1000 to 2000).

### (Formation of regularly arrayed domain structures)

To the above-mentioned sol composition, 2-ethoxyethanol was added and the sol concentration was adjusted to 1% by mass. Then, the mixture was allowed to drop onto a glass substrate 50 by 50 mm square rotating at 50 rpm and spin coating was effected at 4, 000 rpm. After the spin coating process, a nickel stamper having a pattern in which squares with a side length of 5 µm were arrayed on the entire surface in such a manner that the squares are separated by grooves with a width of 500 nm and a depth of 30 nm was placed on the substrate and heating was carried out under the state at 150°C for 20 minutes. Thereafter, they were separated from one another by sonication while rapidly cooling, whereby a sol-gel film having domain structures in which squares are regularly arrayed was formed.

### (Formation of regularly arrayed pores)

A coating solution obtained by adding the above-mentioned sol composition to a dispersion solution containing polystyrene particles with an average size of 30 nm (coefficient of variation: 5%) at 1% by mass in an amount to give a concentration of 35% by volume based on the polystyrene particles was spin coated onto the above-mentioned regularly arrayed domain structures. After the solution was dried at 60°C, the polystyrene particles were dissolved with toluene, whereby regularly arrayed nanopores were formed. Thereafter, this film with the nanopores was dried at 150°C for 20 minutes to form a hard gel film.

### (Incorporation of nanoparticles)

A decane dispersion solution obtained by allowing dodecanethiol to be adsorbed to Au nanoparticles with an average size of 10 nm (coefficient of variation: 10%) and dispersing the particles was spin coated onto the above-mentioned regularly arrayed nanopores and dried at 200°C for 20 minutes, whereby nanostructures were formed.

When the completed nanostructures were observed with a high-resolution scanning electron microscope, regularly arrayed nanostructures in which regularly arrayed nanopores were formed in the regularly arrayed domain structures and Au nanoparticles were incorporated into these nanopores were observed.

### Industrial Applicability

In a nanostructured material of the present invention, regularly arrayed pores with a size of 2 to 200 nm are formed in regularly arrayed domain structures formed on a substrate, and nanoparticles are incorporated into the pores. According to the present invention, a large-area nanostructured material having such a structural feature can be provided at a low price. Therefore, the present invention can be effectively utilized in many fields such as a high-performance composite material, catalyst, nonlinear optical material and memory element.

## Claims

1. A nanostructured material comprising regularly arrayed domain structures formed on a substrate and having therein regularly arrayed pores with a size of 2 to 200 nm and nanoparticles incorporated into the pores; wherein
the regularly arrayed domain structure is obtainable by stamping a given structure with a stamper and has as a concentric arcuate shape, a trapezoidal shape, a rectangular shape or a square shape, and the length of its side ranges from 0.1 to 100 µm;
the regularly arrayed domain structures are made of a sol-gel film;
the sol-gel film contains a silicon atom; and
the sol-gel film is a film obtained by gelling a sol comprising a hydrolysate of a silane compound represented by the following formula (1):
Formula (1) (R¹⁰)ₘ - Si (X)₄₋ₘ
wherein R¹⁰ represents a substituted or unsubstituted alkyl group, or a substituted or unsubstituted aryl group, X represents a hydroxyl group or a hydrolysable group, m represents an integer of 0 to 3, and when a plurality of R¹⁰ or X groups are present, the plurality of R¹⁰ or X groups may respectively be the same or different, and/or a partial condensate thereof.

2. The nanostructured material according to Claim 1, wherein the heat resistance temperature of the substrate is 300°C or higher.

3. The nanostructured material according to Claim 1 or Claim 2, wherein the nanoparticles incorporated into the regularly arrayed pores are particles of a metal, a metal sulfide, a metal oxide or an organic material.

4. The nanostructured material according to Claim 3, wherein the nanoparticles incorporated into the regularly arrayed pores are magnetic nanoparticles with an average size of 2 to 20 nm.

5. The nanostructured material according to any one of Claims 1 to 4, wherein the periphery of the regularly arrayed domain structures is surrounded by a frame with a width of 10 nm to 10 µm and a height of 2 to 100 nm.

6. The nanostructured material according to any one of Claims 1 to 5, wherein the coefficient of variation of the pore size of the regularly arrayed pores is 20% or less.

7. A method of preparing a nanostructured material comprising the steps of:
i) preparing a sol comprising a hydrolysate of a silane compound represented by the following formula (1):
Formula (1) (R¹⁰)ₘ-Si(X)₄₋ₘ
wherein R¹⁰ represents a substituted or unsubstituted alkyl group, or a substituted or unsubstituted aryl group, X represents a hydroxyl group or a hydrolysable group, m represents an integer of 0 to 3, and when a plurality of R¹⁰ or X groups are present, the plurality of R¹⁰ or X groups may respectively be the same or different, and/or a partial condensate thereof;
ii) applying said sol to a substrate to form a sol-gel film on the substrate;
iii) forming the sol-gel film into regularly arrayed domain structures by stamping the sol-gel;
iv) forming regularly arrayed pores on the regularly arrayed domain structures; and
v) incorporating nanoparticles into the pores;
wherein the pores have a size of 2 to 200nm; and wherein the regularly arrayed domain structure has a concentric arcuate shape, a trapezoidal shape, a rectangular shape or a square shape, and the length of its side ranges from 0.1 to 100µm

8. A method according to Claim 7 wherein the substrate has a heat resistance temperature of 300°C or higher.

9. A method according to Claim 7 or Claim 8 wherein the nanoparticles incorporated into the regularly arrayed pores are particles of a metal, a metal sulphide, a metal oxide or an organic material.

10. A method as claimed in any one of Claims 7 to 9 wherein the nanoparticles incorporated into the regularly arrayed pores are magnetic nanoparticles with an average size of 2 to 20nm.

11. A method according to any one of Claims 7 to 10, wherein the regularly arrayed domain structures is formed with a periphery surrounded by a frame with a width of 10nm to 10µm and a height of 2 to 100 nm.

12. A method according to any one of Claims 7 to 11, wherein the regularly arrayed pores are formed with a coefficient of variation of pore size of 20% or less.

## Patentansprüche

1. Nanostrukturiertes Material, umfassend regelmässig angeordnete Domänenstrukturen, die auf einem Substrat gebildet sind und hierin regelmässig angeordnete Poren mit einer Grösse von 2 bis 200 nm und in die Poren eingearbeitete Nanopartikel aufweisen; worin:
die regelmässig angeordnete Domänenstruktur durch Stanzen einer gegebenen Struktur mit einem Stanzer erhältlich ist und eine konzentrische bogenförmige Form, eine trapezförmige Form, eine rechteckige Form oder eine quadratische Form aufweist und die Seitenlängen im Bereich von 0,1 bis 100 µm liegen;
die regelmässig angeordneten Domänenstrukturen aus einem Sol-Gel-Film hergestellt sind;
der Sol-Gel-Film ein Siliciumatom umfasst; und
der Sol-Gel-Film ein Film ist, der erhalten wird durch die Gelbildung eines Sols, das ein Hydrolysat einer Silanverbindung, dargestellt durch die folgende Formel (1):
Formel (1): (R¹⁰)ₘ-Si(X)₄₋ₘ
worin R¹⁰ eine substituierte oder unsubstituierte Alkylgruppe oder eine substituierte oder unsubstituierte Arylgruppe darstellt, X eine Hydroxylgruppe oder eine hydrolysierbare Gruppe darstellt, m eine ganze Zahl von 0 bis 3 darstellt, und wenn mehrere R¹⁰- oder X-Gruppen vorliegen, die mehreren R¹⁰- oder X-Gruppen jeweils gleich oder verschieden sein können,
und/oder ein Teilkondensat hiervon umfasst.

2. Nanostrukturiertes Material gemäss Anspruch 1, worin die Wärmeformbeständigkeitstemperatur des Substrats 300°C oder höher ist.

3. Nanostrukturiertes Material gemäss Anspruch 1 oder Anspruch 2, worin die Nanopartikel, die in die regelmässig angeordneten Poren eingearbeitet sind, Partikel eines Metalls, eines Metallsulfids, eines Metalloxids oder eines organischen Materials sind.

4. Nanostrukturiertes Material gemäss Anspruch 3, worin die Nanopartikel, die in die regelmässig angeordneten Poren eingearbeitet sind, magnetische Nanopartikel mit einer mittleren Grösse von 2 bis 20 nm sind.

5. Nanostrukturiertes Material gemäss irgendeinem der Ansprüche 1 bis 4, worin der Umfang der regelmässig angeordneten Domänenstrukturen von einem Rahmen mit einer Breite von 10 nm bis 10 µm und einer Höhe von 2 bis 100 nm umschlossen ist.

6. Nanostrukturiertes Material gemäss irgendeinem der Ansprüche 1 bis 5, worin der Variationskoeffizient der Porengrösse der regelmässig angeordneten Poren 20 % oder kleiner ist.

7. Verfahren zur Herstellung eines nanostrukturierten Materials, umfassend die Schritte:
(i) Herstellung eines Sols, umfassend ein Hydrolysat einer Silanverbindung, die durch die folgende Formel (1) dargestellt ist:
Formel (1): (R¹⁰)ₘ-Si(X)₄₋ₘ
worin R¹⁰ eine substituierte oder unsubstituierte Alkylgruppe oder eine substituierte oder unsubstituierte Arylgruppe darstellt, X eine Hydroxylgruppe oder eine hydrolysierbare Gruppe darstellt, m eine ganze Zahl von 0 bis 3 darstellt, und wenn mehrere R¹⁰- oder X-Gruppen vorliegen, die mehreren R¹⁰- oder X-Gruppen jeweils gleich oder verschieden sein können, und/oder ein Teilkondensat hiervon;
(ii) Auftragen des Sols auf ein Substrat, um einen Sol-Gel-Film auf dem Substrat zu bilden;
(iii) Formen des Sol-Gel-Films zu regelmässig angeordneten Domänenstrukturen durch Stanzen des Sol-Gels;
(iv) Formen von regelmässig angeordneten Poren auf den regelmässig angeordneten Domänenstrukturen; und
(v) Einarbeiten von Nanopartikeln in die Poren;
worin die Poren eine Grösse von 2 bis 200 nm aufweisen; und worin die regelmässig angeordnete Domänenstruktur eine konzentrische bogenförmige Form, eine trapezförmige Form, eine rechteckige Form oder eine quadratische Form aufweist und die Seitenlängen im Bereich von 0,1 bis 100 µm liegen.

8. Verfahren gemäss Anspruch 7, worin das Substrat eine Wärmeformbeständigkeitstemperatur von 300°C oder höher aufweist.

9. Verfahren gemäss Anspruch 7 oder Anspruch 8, worin die Nanopartikel, die in die regelmässig angeordneten Poren eingearbeitet sind, Partikel eines Metalls, eines Metallsulfids, eines Metalloxids oder eines organischen Materials sind.

10. Verfahren gemäss irgendeinem der Ansprüche 7 bis 9,
worin die Nanopartikel, die in die regelmässig angeordneten Poren eingearbeitet sind, magnetische Nanopartikel mit einer mittleren Grösse von 2 bis 20 nm sind.

11. Verfahren gemäss irgendeinem der Ansprüche 7 bis 10,
worin die regelmässig angeordneten Domänenstrukturen mit einem Umfang gebildet sind, der von einem Rahmen mit einer Breite von 10 nm bis 10 µm und einer Höhe von 2 bis 100 nm umschlossen ist.

12. Verfahren gemäss irgendeinem der Ansprüche 7 bis 11,
worin die regelmässig angeordneten Poren mit einem Variationskoeffizienten der Porengrösse von 20 % oder kleiner gebildet sind.

## Revendications

1. Matière nanostructurée comprenant des structures de domaines régulièrement disposées formées sur un substrat et présentant dans celles-ci des pores régulièrement disposés avec une taille de 2 à 200 nm et des nanoparticules incorporées dans les pores ; dans laquelle :
la structure de domaine régulièrement disposée peut être obtenue en marquant au poinçon une structure donnée avec un poinçon et présente une forme arquée concentrique, une forme trapézoïdale, une forme rectangulaire ou une forme carrée et la longueur de son côté est de 0,1 à 100 µm;
les structures de domaines régulièrement disposées sont constituées d'un film sol-gel ;
le film sol-gel contient un atome de silicium ; et
le film sol-gel est un film obtenu par gélification d'un sol comprenant un hydrolysat d'un composé de silane représenté par la formule (1) suivante :
Formule (1) (R¹⁰)ₘ-Si(X)₄₋ₘ
dans laquelle R¹⁰ représente un groupe alkyle substitué ou non substitué ou un groupe aryle substitué ou non substitué, X représente un groupe hydroxyle ou un groupe hydrolysable, m représente un nombre entier de 0 à 3 et, lorsqu'il y a plusieurs groupes R¹⁰ ou X, les plusieurs groupes R¹⁰ ou X peuvent être respectivement identiques ou différents, et/ou un condensat partiel de celui-ci.

2. Matière nanostructurée selon la revendication 1, dans laquelle la température de résistance thermique du substrat est de 300°C ou supérieure.

3. Matière nanostructurée selon la revendication 1 ou la revendication 2, dans laquelle les nanoparticules incorporées dans les pores régulièrement disposés sont des particules d'un métal, d'un sulfure de métal, d'un oxyde de métal ou d'un matériau organique.

4. Matière nanostructurée selon la revendication 3, dans laquelle les nanoparticules incorporées dans les pores régulièrement disposés sont des nanoparticules magnétiques avec une taille moyenne de 2 à 20 nm.

5. Matière nanostructurée selon l'une quelconque des revendications 1 à 4, dans laquelle la périphérie des structures de domaines régulièrement disposées est entourée par un cadre avec une largeur de 10 nm à 10 µm et une hauteur de 2 à 100 nm.

6. Matière nanostructurée selon l'une quelconque des revendications 1 à 5, dans laquelle le coefficient de variation de la taille de pores des pores régulièrement disposés est de 20 % ou inférieur.

7. Procédé de préparation d'une matière nanostructurée comprenant les étapes consistant :
i) à préparer un sol comprenant un hydrolysat d'un composé de silane représenté par la formule (1) suivante :
Formule (1) (R¹⁰)ₘ-Si(X)₄₋ₘ
dans laquelle R¹⁰ représente un groupe alkyle substitué ou non substitué ou un groupe aryle substitué ou non substitué, X représente un groupe hydroxyle ou un groupe hydrolysable, m représente un nombre entier de 0 à 3, et lorsque plusieurs groupes R¹⁰ ou X sont présents, les plusieurs groupes R¹⁰ ou X peuvent respectivement être identiques ou différents, et/ou un condensat partiel de celui-ci ;
ii) à appliquer ledit sol à un substrat pour former un film de sol-gel sur le substrat ;
iii) à façonner le film de sol-gel en des structures de domaines régulièrement disposées par marquage au poinçon du sol-gel ;
iv) à former des pores régulièrement disposés sur les structures de domaines régulièrement disposées ; et
v) à incorporer des nanoparticules dans les pores ;
dans lequel les pores présentent une taille de 2 à 200 nm ; et dans lequel la structure de domaine régulièrement disposée présente une forme arquée concentrique, une forme trapézoïdale, une forme rectangulaire ou une forme carrée et la longueur de son côté est de 0,1 à 100 µm.

8. Procédé selon la revendication 7, dans lequel le substrat présente une température de résistance thermique de 300°C ou supérieure.

9. Procédé selon la revendication 7 ou la revendication 8, dans lequel les nanoparticules incorporées dans les pores régulièrement disposés sont des particules d'un métal, d'un sulfure de métal, d'un oxyde de métal ou d'un matériau organique.

10. Procédé selon l'une quelconque des revendications 7 à 9, dans lequel les nanoparticules incorporées dans les pores régulièrement disposés sont des nanoparticules magnétiques avec une taille moyenne de 2 à 20 nm.

11. Procédé selon l'une quelconque des revendications 7 à 10, dans lequel les structures de domaines régulièrement disposées sont formées avec une périphérie entourée par un cadre avec une largeur de 10 nm à 10 µm et une hauteur de 2 à 100 nm.

12. Procédé selon l'une quelconque des revendications 7 à 11, dans lequel les pores régulièrement disposés sont formés avec un coefficient de variation de taille de pores de 20 % ou inférieur.
